# EUROPÄISCHE PATENTSCHRIFT

(11) **EP 1 765 578 B1**
(45) Veröffentlichungstag und Bekanntmachung des Hinweises auf die Patenterteilung: **28.04.2010**
(21) Anmeldenummer: 06753782.9
(22) Anmeldetag: 22.05.2006
(51) Int. Cl.: B29C 67/00, G02B 27/00, B23K 26/12, B23K 26/16, H01S 3/00

(54) **VORRICHTUNG UND VERFAHREN ZUM SCHICHTWEISEN HERSTELLEN EINES DREIDIMENSIONALEN OBJEKTS**
APPARATUS AND METHOD FOR LAYERED PRODUCTION OF A THREE-DIMENSIONAL OBJECT
PROCEDE ET DISPOSITIF POUR REALISER UN OBJET TRIDIMENSIONNEL PAR COUCHES

(30) Priorität: 21.07.2005 DE 102005034155
(43) Veröffentlichungstag der Anmeldung: 28.03.2007
(73) Patentinhaber: EOS GmbH Electro Optical Systems, 82152 Krailling (DE)
(72) Erfinder: FRUTH, Albert, 81735 München (DE); PERRET, Hans, 81543 München (DE)
(74) Vertreter: Hofer, Dorothea
(86) Internationale Anmeldenummer: PCT/EP2006/004849
(87) Internationale Veröffentlichungsnummer: WO 2007/009526

(56) Entgegenhaltungen:
- US-A- 3 495 259
- US-A- 5 837 960
- US-A- 5 876 767
- US-B1- 6 583 379
- PATENT ABSTRACTS OF JAPAN Bd. 015, Nr. 166 (P-1195), 25. April 1991 (1991-04-25) & JP 03 033812 A (CANON INC), 14. Februar 1991 (1991-02-14)

## Beschreibung

Die vorliegende Erfindung bezieht sich auf eine Vorrichtung und ein Verfahren zum schichtweisen Herstellen eines dreidimensionalen Objekts.

Solche Vorrichtungen sind im Stand der Technik beispielsweise bekannt als Vorrichtungen zur Stereolithographie, zum Lasersintern usw.

So ist der Anmelderin beispielsweise eine Vorrichtung zum schichtweisen Herstellen eines Objektes mittels Lasersintern mit einem Träger zum Positionieren des Objektes relativ zu einer Arbeitsoberfläche und einer Vorrichtung zum Aufbringen eines durch elektromagnetische Strahlung verfestigbaren Pulvers bekannt. Die Vorrichtung weist einen Laser auf. Der durch den Laser erzeugte Laserstrahl wird durch eine Fokussiervorrichtung mittels Linsen auf einen Punkt in der Arbeitsoberfläche fokussiert und verfestigt das Pulver. Insbesondere bei der Verwendung von Kunststoffen als Pulver entweichen dabei flüchtige Zersetzungs- und Reaktionsprodukte aus dem Pulver, die sich auf der Linse niederschlagen und so die Transparenz dieser im Laufe des Bauprozesses immer weiter verringern. Dies führt dazu, dass der Laserstrahl immer weniger transmittiert wird, wodurch seine Intensität in der Arbeitsoberfläche absinkt. Aufgrund der sinkenden Intensität vermindert sich die Qualität des zu bildenden Objektes. Um dies zu verhindern, ist vor der Linse ein Schutzglas angeordnet, das aus mehreren Düsen mit Stickstoff angeblasen wird. Da jedoch das Schutzglas nur teilweise mit Stickstoff überströmt wird und da zwischen den Düsen keine Strömung anliegt, schlagen sich an diesen Stellen die Verschmutzungen nieder. Daher muss das Schutzglas nach jedem Bauprozess eines Objektes entnommen und gereinigt werden.

Zur Lösung dieses Problem schlägt die EP 0 785 838 eine Vorrichtung vor, bei der die Fokussiervorrichtung angrenzend an die der Arbeitsoberfläche zugewandte Oberfläche der Linse eine Ringdüse aufweist, die ausgangsseitig so zu der Oberfläche der Linse hin gerichtet ist, dass ein austretender Strom tangential an der Oberfläche der Linse zur Mitte hin entlang streicht, und die eingangsseitig mit einer Quelle eines unter Druck stehenden Gases wie z.B. Stickstoff abschaltbar verbunden ist.

US 5,837,960 offenbart eine Vorrichtung gemäß dem Oberbegriff des Anspruchs 1 und ein Verfahren gemäß dem Oberbegriff des Anspruchs 17 zum Aufbauen von Artikel aus Partikelmaterial, das durch einen Laserstrahl aufgeschmolzen und entlang eines Werkzeugpfads abgeschieden wird, um einen Artikel einer gewünschten Form und Größe zu gewinnen. Die Temperatur eines Einkoppelfensters, durch das der Laserstrahl in einen Bauraum hineinstrahlt, wird durch den Laserstrahl erhöht.

US 3,495,259 offenbart eine Vorrichtung, bei dem eine Austrittslinse einer optischen Vorrichtung beheizt wird.

Der vorliegenden Erfindung liegt daher die Aufgabe zugrunde, eine Vorrichtung zum schichtweisen Herstellen eines dreidimensionalen Objekts bereitzustellen, die wirkungsvoll eine Verschmutzung eines zum Durchlassen elektromagnetischer Strahlung zu der Arbeitsfläche dienenden Einkoppelfensters verhindert.

Die Aufgabe wird gelöst durch eine Vorrichtung gemäß Anspruch 1 bzw. durch ein Verfahren gemäß Anspruch 17. Weiterbildungen der Erfindung sind jeweils in den Unteransprüchen gekennzeichnet.

Bei dieser Vorrichtung ist für das Einkoppelfenster für die elektromagnetische Strahlung ein Heizelement vorgesehen, um die Temperatur der Linse während des Aufbauens des dreidimensionalen Objekts zu erhöhen. Durch die erhöhte Temperatur wird verhindert, dass sich Verschmutzungen auf dem Einkoppelfenster ansammeln.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: ein schematisches Blockdiagramm einer Ausführungsform einer Vorrichtung zum schichtweisen Herstellen eines dreidimensionalen Objekts;
- Fig. 2: eine Explosionsdarstellung eines in der Vorrichtung von Fig. 1 enthaltenen Linsenmoduls;
- Fig. 3: eine Schnittansicht des Linsenmoduls von Fig. 2;
- Fig. 4: ein Detail der Schnittansicht von Fig. 3;
- Fig. 5: eine Schnittansicht eines Linsenmoduls mit einem Heizelement gemäß einer zweiten Ausführungsform; und
- Fig. 6: ein Detail der Schnittansicht von Fig. 5.

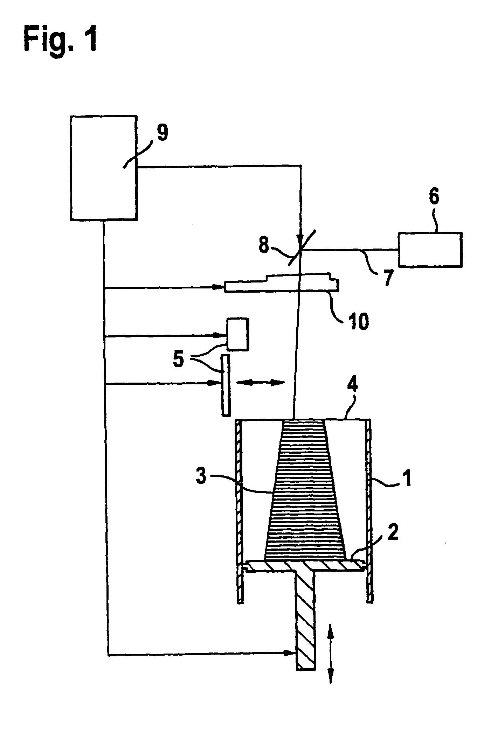

Im Folgenden wird mit Bezug auf Fig. 1 bis 4 eine Vorrichtung zum schichtweisen Herstellen eines dreidimensionalen Objekts gemäß einer ersten Ausführungsform der vorliegenden Erfindung beschrieben.

Wie aus Fig. 1 ersichtlich, weist die Vorrichtung zum schichtweisen Herstellen eines Objektes einen oben offenen Behälter 1 auf. In diesem Behälter 1 ist ein in vertikaler Richtung bewegbarer Träger 2 angeordnet, der das zu bildende Objekt 3 trägt. Der Träger 2 wird in vertikaler Richtung so eingestellt, dass die jeweils zu verfestigende Schicht des Objekts 3 in einer Arbeitsebene 4 liegt. Weiter ist eine Aufbringvorrichtung 5 zum Aufbringen des durch elektromagnetische Strahlung verfestigbaren pulverförmigen Aufbaumaterials vorgesehen. Die Vorrichtung weist einen Laser 6 auf. Der durch den Laser 6 erzeugte Laserstrahl 7 wird über eine Umlenkvorrichtung 8, die von einer Steuervorrichtung 9 gesteuert wird, umgelenkt und durch eine Fokussiervorrichtung 10 in einem vorbestimmten Punkt in der Arbeitsebene 4 fokussiert.

Der Bereich der Vorrichtung, in dem das Objekt 3 aufgebaut wird, wird im Allgemeinen als "Bauraum" bezeichnet.

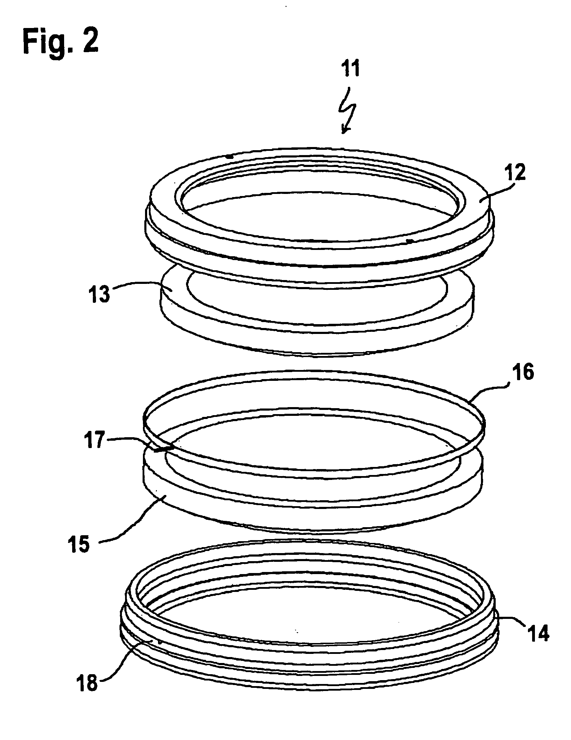

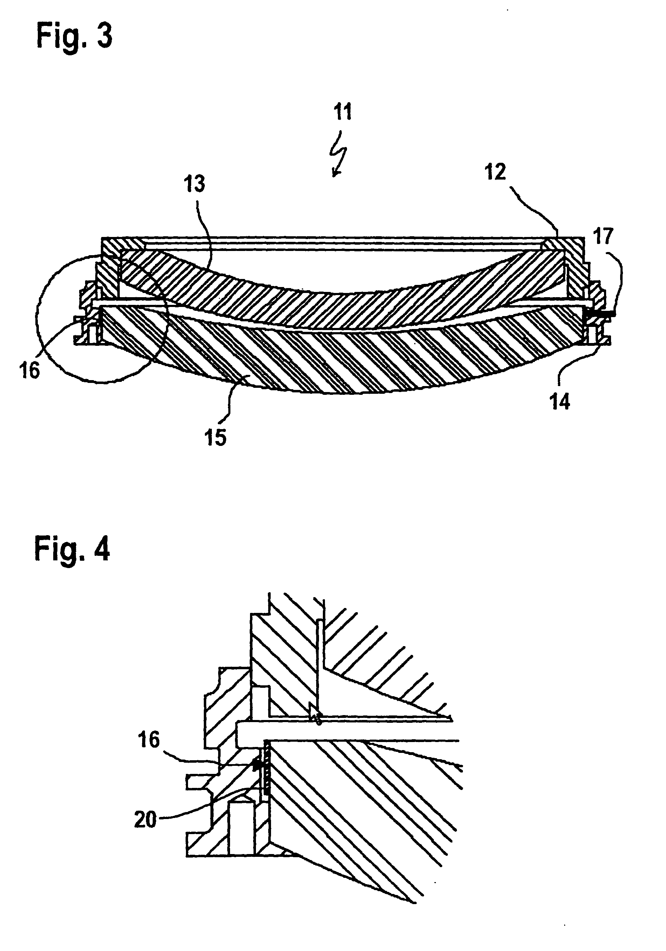

Die Fokussiereinrichtung 10 enthält ein Linsenmodul 11, das in Fig. 2 und 3 näher dargestellt ist.

Das Linsenmodul 11 enthält einen Haltering 12; eine Eintrittslinse 13, die in dem Haltering 12 gehalten ist und durch die der Laserstrahl 7 in das Linsenmodul 11 eintritt; eine Objektivfassung 14, die auf der der Arbeitebene 7 zugewandten Seite auf den Haltering 12 aufgesetzt ist; und eine Austrittslinse 15, die von der Objektivfassung 14 gehalten wird und durch die der Laserstrahl 7 aus dem Linsenmodul 11 austritt.

Für die Austrittslinse 15, die auf der der Arbeitsebene 7 zugewandten Seite des Linsenmoduls angeordnet und daher einer Gefahr der Verschmutzung ausgesetzt ist, ist ein Heizelement 16 bereitgestellt, das um den Rand der Austrittslinse 15 herum angeordnet ist. Das Heizelement 16 enthält elektrische Zuführungen 17, die durch eine Ausnehmung 18 in der Objektivfassung 14 hindurch aus dem Linsenmodul 11 herausgeführt sind.

In der vorliegenden Ausführungsform enthält dieses Heizelement 16 eine Drahtwicklung 20.

Im folgenden wird ein Beispiel für das Bilden des Heizelements 16 und für sein Anbringen an der Austrittslinse 15 beschrieben.

Aus einem lackisolierten Kupferdraht mit einer Stärke von beispielsweise 0,1 mm wird in einer Form entsprechend dem Außendurchmesser der Austrittslinse eine Drahtwicklung 20 geformt und mit einem Verbindungsmaterial wie z.B. einem Epoxidharz zu einer Einheit verbunden. Das so gebildete Heizelement 16 wird anschließend auf einen zylindrischen Außenrand der Austrittslinse geklebt. Die Drahtenden der Drahtwicklung 20 werden als elektrische Zuführungen 17 durch die Ausnehmung 18 in der Objektivfassung 14 hindurch aus dem Linsenmodul 11 herausgeführt.

Im Betrieb der Vorrichtung zum schichtweisen Herstellen eines dreidimensionalen Objekts werden die elektrischen Zuführungen 17 mit elektrischer Energie beaufschlagt, die durch die Drahtwicklung 20 in Wärme umgewandelt wird. Diese Wärme wird an die Austrittslinse 15 abgeführt, so dass sich deren Temperatur erhöht. Durch die Temperaturerhöhung der Austrittslinse 15, z.B. auf mehr als etwa 100°, wird eine Verschmutzung der Austrittslinse 15 durch Kondensate deutlich verringert.

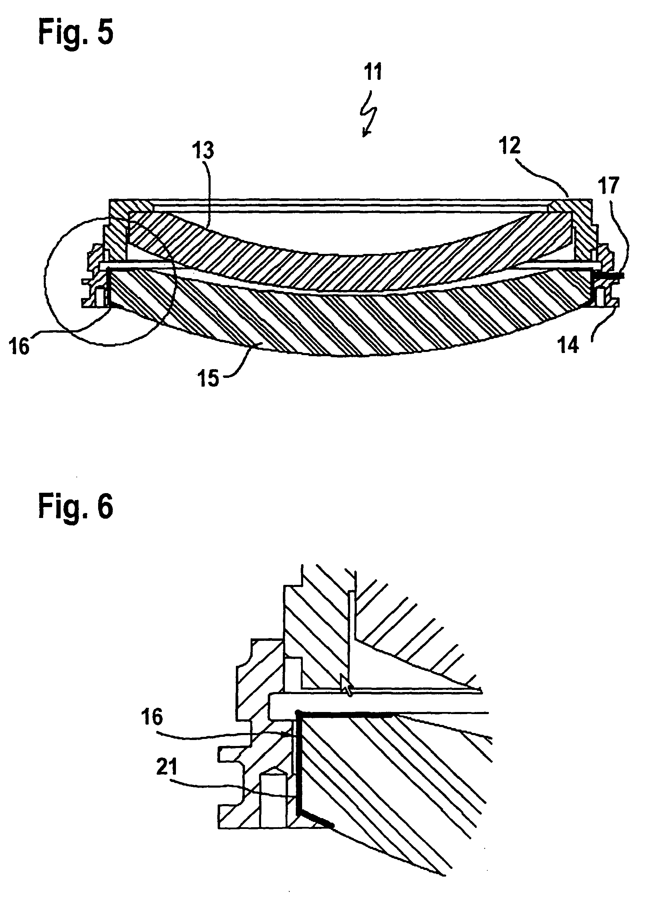

Wie aus Fig. 5 und 6 ersichtlich, unterscheidet sich eine zweite Ausführungsform der Vorrichtung zum schichtweisen Herstellen eines dreidimensionalen Objekts von der ersten Ausführungsform in der Ausbildung des Heizelements.

Gemäß der zweiten Ausführungsform ist das Heizelement 16 gebildet aus einer Schicht 21 eines elektrisch leitenden Materials wie beispielsweise Metall, Graphit usw., die durch Bedampfen oder Bedrucken des nicht zur Fokussierung des Laserstrahls 7 dienenden Randes der Austrittslinse 15 gebildet wird. Alternativ kann auch eine Metall- oder Graphitfolie oder eine mit einem leitenden Material beschichtete Trägerfolie auf den Rand der Linse aufgeklebt werden.

Zur Erhöhung des elektrischen Widerstands kann die leitende Schicht 21 strukturiert sein, beispielsweise so, dass sie mäanderförmig ausgebildet ist.

Diese Ausführungsform kann vorteilhaft auch auf Linsen mit nicht kreisförmigem Rand angewendet werden.

Das Anschließen der elektrischen Zuleitungen 17 an das Heizelement 16 kann in den oben beschriebenen Ausführungsformen beispielsweise durchgeführt sein durch direktes Herausführen der Kabel, Verkrimpen oder Verlöten im Inneren der Objektivfassung 14 an mechanisch festere Kabel, Klemmkontaktierung im Gehäuse usw.

In allen Ausführungsformen ist es möglich, die Temperatur der Austrittslinse zu regeln. Das kann durch Messen der Temperatur mit einem zusätzlich bereitgestellten Temperatursensor und entsprechendes Nachregeln der zugeführten elektrischen Energie erfolgen. Alternativ kann die Temperaturabhängigkeit des Widerstands des Heizelements genutzt werden, um über eine Messung von Strom und Spannung ohne zusätzlichen Temperatursensor die Temperatur zu ermitteln.

Das Linsenmodul weist in den oben aufgeführten Ausführungsformen zwei Linsen auf. Alternativ können jedoch auch Linsenmodule mit nur einer Linse oder mit mehr als zwei Linsen verwendet werden.

Falls wie bei der eingangs geschilderten Vorrichtung ein Schutzglas vor der Linse angeordnet ist, um eine Verschmutzung der Linse zu verhindern, kann das Heizelement in gleicher Weise, wie es in den oben aufgeführten Ausführungsformen für die Linse bereitgestellt ist, auch für das Schutzglas bereitgestellt sein.

Ganz allgemein kann die Erfindung auf jedes zum Übertragen elektromagnetischer Strahlung zu dem aufzubauenden dreidimensionalen Objekt hin dienende Einkoppelfenster angewendet werden.

Weiterhin kann zusätzlich eine Vorrichtung vorgesehen sein, die wie in der Einleitung beschrieben ein Gas wie z.B. Stickstoff auf das Einkoppelfenster bläst. Gegenüber dem bekannten Verfahren kann in diesem Fall die Gaszufuhr verringert sein.

Auch wenn die Erfindung in den oben aufgeführten Ausführungsformen lediglich anhand des Lasersinterns erläutert wurde, lässt sie sich vorteilhaft auch auf andere Vorrichtungen zum schichtweisen Herstellen eines dreidimensionalen Objekts durch Verfestigen eines durch elektromagnetische Strahlung verfestigbaren Materials anwenden, bei denen ein Einkoppelfenster zum Übertragen elektromagnetischer Strahlung zu dem aufzubauenden dreidimensionalen Objekt hin vorhanden ist.

## Patentansprüche

1. Vorrichtung zum schichtweisen Herstellen eines dreidimensionalen Objekts (3) durch Verfestigen eines durch elektromagnetische Strahlung (7) verfestigbaren Materials mit
einer Quelle (6) für die elektromagnetische Strahlung (7),
einem Bauraum zum Herstellen des dreidimensionalen Objekts (3), und
einem Einkoppelfenster zum Hindurchlassen der elektromagnetische Strahlung (7) in den Bauraum,
**dadurch gekennzeichnet, dass**
die Vorrichtung ein Heizelement (16) zum Beheizen des Einkoppelfensters aufweist.

2. Vorrichtung nach Anspruch 1, bei der das Einkoppelfenster eine zum Fokussieren der elektromagnetischen Strahlen (7) dienende Linse (15) aufweist.

3. Vorrichtung nach Anspruch 1 oder 2, bei der das Einkoppelfenster ein Schutzglas aufweist.

4. Vorrichtung nach einem der Ansprüche 1 bis 3, bei der das Heizelement (16) an dem Einkoppelfenster angebracht ist.

5. Vorrichtung nach einem der Ansprüche 1 bis 4, bei der das Heizelement (16) eine Drahtwicklung (20) aufweist, die um den Rand des Einkoppelfensters herum angebracht ist.

6. Vorrichtung nach einem der Ansprüche 1 bis 4, bei der das Heizelement (16) eine Schicht (21) aus einem elektrisch leitenden Material aufweist, die am Rand des Einkoppelfensters aufgedampft oder aufgedruckt ist.

7. Vorrichtung nach Anspruch 6, bei das elektrisch leitende Material ein Metall oder Graphit ist.

8. Vorrichtung nach einem der Ansprüche 1 bis 4, bei der das Heizelement (16) eine elektrisch leitende Folie (21) aufweist, die am Rand des Einkoppelfensters aufgebracht ist.

9. Vorrichtung nach Anspruch 8, bei die elektrisch leitende Folie (21) eine Metall- oder Graphitfolie oder eine mit einem leitenden Material beschichtete Trägerfolie ist.

10. Vorrichtung einem der Ansprüche 6 bis 9, bei der die elektrisch leitende Schicht oder Folie (21) strukturiert ist.

11. Vorrichtung nach Anspruch 10, bei der die elektrisch leitende Schicht oder Folie (21) mäanderförmig ausgebildet ist.

12. Vorrichtung nach einem der Ansprüche 1 bis 11, bei der
das Einkoppelfenster in einer Fassung (14) gehalten wird und
das Heizelement (16) elektrische Zuführungen (17) aufweist, die durch eine Ausnehmung (18) in der Fassung (14) nach außen geführt sind.

13. Vorrichtung nach einem der Ansprüche 1 bis 12, bei der die Temperatur des Einkoppelfensters regelbar ist.

14. Vorrichtung nach Anspruch 13, bei der die Temperatur des Einkoppelfensters über einen zusätzlich bereitgestellten Temperatursensor ermittelbar ist.

15. Vorrichtung nach Anspruch 13, bei der die Temperatur des Einkoppelfensters durch eine Messung von Strom und Spannung des Heizelements (16) ermittelbar ist.

16. Vorrichtung nach einem der Ansprüche 1 bis 15 mit
einer Vorrichtung zum Anblasen des Einkoppelfensters mit einem Gas.

17. Verfahren zum schichtweisen Herstellen eines dreidimensionalen Objekts (3) durch Verfestigen eines durch elektromagnetische Strahlung (7) verfestigbaren Materials, bei dem
die von einer Quelle (6) abgegebene elektromagnetische Strahlung (7) durch ein Einkoppelfenster in einen zum Herstellen des dreidimensionalen Objekts (3) dienenden Bauraum hindurchgelassen wird,
**dadurch gekennzeichnet, dass**
das Einkoppelfenster während des schichtweisen Herstellens des dreidimensionalen Objekts (3) durch ein Heizelement (16) beheizt wird.

18. Verfahren nach Anspruch 17, bei dem die Temperatur des Einkoppelfensters geregelt wird.

19. Verfahren nach Anspruch 18, bei dem die Temperatur des Einkoppelfensters über einen zusätzlich bereitgestellten Temperatursensor ermittelt wird.

20. Verfahren nach Anspruch 18, bei dem die Temperatur des Einkoppelfensters durch eine Messung von Strom und Spannung des Heizelements ermittelt wird.

21. Verfahren nach einem der Ansprüche 17 bis 20, bei dem das Einkoppelfenster zusätzlich mit einem Gas angeblasen wird.

## Claims

1. Apparatus for layerwise manufacturing a three-dimensional object (3) by solidification of a material which can be solidified through electromagnetic radiation (7), comprising:
a source (6) for the electromagnetic radiation (7),
a building space for manufacturing the three-dimensional object (3), and
a coupling window for transmitting the electromagnetic radiation (7) into the building space,
**characterized in that**
the apparatus comprises a heating element (16) for heating the coupling window.

2. The apparatus according to claim 1, wherein the coupling window comprises a lens (15) serving for focussing the electromagnetic radiation (7).

3. The apparatus according to claim 1 or 2, wherein the coupling window comprises a safety glass.

4. The apparatus according to one of claims 1 to 3, wherein the heating element (16) is attached to the coupling window.

5. The apparatus according to one of claims 1 to 4, wherein the heating element (16) comprises a wire coiling (20) which is attached around the edge of the coupling window.

6. The apparatus according to one of claims 1 to 4, wherein the heating element (16) comprises a layer (21) of an electrically conducting material which is vapour deposited or printed at the edge of the coupling window.

7. The apparatus according to claim 6, wherein the electrically conducting material is a metal or graphite.

8. The apparatus according to one of claims 1 to 4, wherein the heating element (16) comprises an electrically conducting foil (21) which is applied at the edge of the coupling window.

9. The apparatus according to claim 8, wherein the electrically conducting foil (21) is a metal or graphite foil or a carrier foil which is coated with a conducting material.

10. The apparatus according to one of claims 6 to 9, wherein the electrically conducting layer or foil (21) is structured.

11. The apparatus according to claim 10, wherein the electrically conducting layer or foil (21) is formed in the shape of a meander.

12. The apparatus according to one of claims 1 to 11, wherein the coupling window is held in a mount (14) and
the heating element (16) comprises electrical leads (17) which are led to the outside through an opening (18) in the mount (14).

13. The apparatus according to one of claims 1 to 12, wherein the temperature of the coupling window can be controlled.

14. The apparatus according to claim 13, wherein the temperature of the coupling window can be detected via an additionally provided temperature sensor.

15. The apparatus according to claim 13, wherein the temperature of the coupling window can be detected by a measurement of the current and the voltage of the heating element (16).

16. The apparatus according to one of claims 1 to 15, comprising a device for blowing the coupling window with a gas.

17. A method for layerwise manufacturing a three-dimensional object (3) by solidification of a material which can be solidified by electromagnetic radiation (7), wherein
the electromagnetic radiation (7) emitted from a source (6) is let through by a coupling window into a building space serving for manufacturing the three-dimensional object (3),
**characterized in that**
the coupling window is heated by a heating element (16) during the layerwise manufacturing of the three-dimensional object (3).

18. Method according to claim 17, wherein the temperature of the coupling window is controlled.

19. Method according to claim 18, wherein the temperature of the coupling window is detected via an additionally provided temperature sensor.

20. Method according to claim 18, wherein the temperature of the coupling window is detected by a measurement of the current and the voltage of the heating element.

21. Method according to one of claims 17 to 20, wherein the coupling window is additionally blown with a gas.

## Revendications

1. Dispositif de réalisation par couches d'un objet (3) tridimensionnel moyennant le durcissement d'un matériau durcissant sous l'effet d'un rayonnement (7) électromagnétique, comportant
une source (6) pour le rayonnement (7) électromagnétique,
un espace de réalisation pour la réalisation de l'objet (3) tridimensionnel, et
une fenêtre d'admission destinée à laisser passer le rayonnement (7) électromagnétique dans l'espace de réalisation,
**caractérisé en ce que** le dispositif comporte un élément (16) de chauffage pour le chauffage de la fenêtre d'admission.

2. Dispositif selon la revendication 1, dans lequel la fenêtre d'admission comporte une lentille (15) destinée à focaliser les rayons (7) électromagnétiques.

3. Dispositif selon la revendication 1 ou 2, dans lequel la fenêtre d'admission comporte un verre de protection.

4. Dispositif selon l'une quelconque des revendications 1 à 3, dans lequel l'élément (16) de chauffage est monté sur la fenêtre d'admission.

5. Dispositif selon l'une quelconque des revendications 1 à 4, dans lequel l'élément (16) de chauffage comporte un enroulement (20) de fil, qui est monté autour du bord de la fenêtre d'admission.

6. Dispositif selon l'une quelconque des revendications 1 à 4, dans lequel l'élément (16) de chauffage comporte une couche (21) en matériau électroconducteur, qui est métallisée sous vide ou imprimée sur le bord de la fenêtre d'admission.

7. Dispositif selon la revendication 6, dans lequel le matériau électroconducteur est un métal ou du graphite.

8. Dispositif selon l'une quelconque des revendications 1 à 4, dans lequel l'élément (16) de chauffage comporte une feuille (21) électroconductrice qui est posée sur le bord de la fenêtre d'admission.

9. Dispositif selon la revendication 8, dans lequel la feuille (21) électroconductrice est une feuille de métal ou une feuille de graphite ou une feuille support revêtue d'un matériau conducteur.

10. Dispositif selon l'une quelconque des revendications 6 à 9, dans lequel la couche ou la feuille (21) électroconductrice est structurée.

11. Dispositif selon la revendication 10, dans lequel la couche ou la feuille (21) électroconductrice est réalisée en forme de méandres.

12. Dispositif selon l'une quelconque des revendications 1 à 11, dans lequel la fenêtre d'admission est maintenue dans un cadre (14), et l'élément (16) de chauffage comporte des lignes d'acheminement (17) électriques, qui sont menées vers l'extérieur en passant à travers un évidement (18) dans le cadre (14).

13. Dispositif selon l'une quelconque des revendications 1 à 12, dans lequel la température de la fenêtre d'admission est réglable.

14. Dispositif selon la revendication 13, dans lequel la température de la fenêtre d'admission peut être déterminée par un capteur de température mis à disposition en plus.

15. Dispositif selon la revendication 13, dans lequel la température de la fenêtre d'admission peut être déterminée par une mesure du courant et de la tension de l'élément (16) de chauffage.

16. Dispositif selon l'une quelconque des revendications 1 à 15, comportant un dispositif pour souffler un gaz sur la fenêtre d'admission.

17. Procédé de réalisation par couches d'un objet (3) tridimensionnel moyennant le durcissement d'un matériau durcissant sous l'effet d'un rayonnement électromagnétique (7), dans lequel
le rayonnement électromagnétique (7) émis par une source (6) passe à travers une fenêtre d'admission pour entrer dans un espace de réalisation destiné à la réalisation de l'objet (3) tridimensionnel,
**caractérisé en ce que**
la fenêtre d'admission est chauffée par un élément de chauffage (16) pendant la réalisation par couches de l'objet (3) tridimensionnel.

18. Procédé selon la revendication 17, dans lequel la température de la fenêtre d'admission est réglée.

19. Procédé selon la revendication 18, dans lequel la température de la fenêtre d'admission est déterminée par un capteur de température mis à disposition en plus.

20. Procédé selon la revendication 18, dans lequel la température de la fenêtre d'admission est déterminée par une mesure du courant et de la tension de l'élément (16) de chauffage.

21. Procédé selon l'une quelconque des revendications 17 à 20, dans lequel, de surcroît, un gaz est soufflé sur la fenêtre d'admission.
